# EUROPÄISCHE PATENTANMELDUNG

(11) **EP 3 889 470 A1**
(43) Veröffentlichungstag der Anmeldung: **06.10.2021**
(21) Anmeldenummer: 20167666.5
(22) Anmeldetag: 02.04.2020
(51) Int. Cl.: F16J 3/04, F16D 3/00

(54) **ANORDNUNG ZUM ABDICHTEN EINES GELENKBAUTEILS**

(71) Anmelder: Henniges Automotive GmbH & Co. KG, 31547 Rehburg Loccum (DE)
(72) Erfinder: SEIPEL, Petric, 31515 Wunstorf (DE)
(74) Vertreter: Daum, Patrick

(57) **Zusammenfassung**

Eine Anordnung zum Abdichten eines Gelenkkopfes (3) eines Gelenkbauteils (1) ist beschrieben. Dies Anordnung weist ein Dichtungselement (4) und ein Halteelement (6) auf, wobei das Halteelement (6) zumindest teilweise den Gelenkkopf (3) in axialer Richtung umgibt und ausgestaltet ist, um das Dichtungselement (4) in axialer Richtung pressend am Gelenkkopf (3) zu halten.

## Beschreibung

Die Erfindung betrifft eine Anordnung zum Abdichten eines Gelenkbauteils, insbesondere eines Gelenkkopfes.

Gelenkbauteile werden beispielsweise in Kraftfahrzeugen eingebaut. Sie nehmen beispielsweise freie Enden von Wellen bzw. Achsen auf, um an diesen Achsen bzw. Wellen Radansetzungen für Räder aufzunehmen. Dabei ist in einem derartigen Gelenkbauteil, insbesondere in einem Gelenkkopf, eine Bewegung der Welle vorzusehen, um gerade bei einem Kraftfahrzeug vertikale Aufbaubewegungen des Rades abzufangen. In einem Gelenkkopf sind dazu die Bauteile bzw. Mechanik eines Gelenkes und in der Regel Fett oder andere Schmiermittel enthalten, um eine gute Schmierung der Bauteile des Gelenks und damit deren Leichtgängigkeit zu gewährleisten.

Um ein Austreten des Schmiermittels zu verhindern und um die Bauteile des Gelenks vor Verschmutzung und/oder Feuchtigkeit zu schützen, wird zwischen der aufnehmenden Welle bzw. Achse und dem Gelenkkopf ein Dichtungselement angeordnet, welches den Gelenkkopf abdichtet. Dieses Dichtungselement wird häufig in Form eines Faltbalgs ausgeführt. Faltenbälge stellen flexible und/oder elastische balgartige Abdeckungen für den Gelenkkopf dar. Die im Stand der Technik bekannten Faltbälge werden dabei entweder fest mit dem Gelenkkopf verpresst oder werden mit Hilfe von Schellen oder Spannbändern lösbar am Gelenkkopf befestigt. Gleichfalls wird der Faltbalg, der auch als Dichtungsbalg bezeichnet werden kann, an der Welle befestigt. Es ist auch möglich, dass der Faltbalg an ein zusätzliches Metallteil, beispielsweise einen Blechtopf, angespritzt oder mittels einer Schelle / Spannband befestigt ist und das Metallteil dann eine Verbindung mit dem Gelenkkopf herstellt. Hierbei werden aber regelmäßig noch weitere Dichtungen wie O-Ringe oder dergleichen benötigt, um die gewünschte Abdichtwirkung zwischen dem Metallteil und dem Gelenkkopf zu erzielen. Dieser Aufbau eines Gelenkbauteils ist relativ aufwändig.

Des Weiteren haben sich beide, die feste sowie die lösbare Befestigungsart als nachteilig herausgestellt. Bei der nicht reversiblen, also festen, Befestigung an dem Gelenkkopf muss immer das komplette Gelenkbauteil ersetzt werden. Bei der reversiblen, also der lösbaren, Befestigung an dem Gelenkkopf kann es dazu kommen, dass der Öffnungsmechanismus der Schelle oder des Spannbandes an einer unzugänglichen Stelle liegt, oder die Schelle / Spannband den Faltbalg selbst beschädigt.

Der Erfindung liegt also die Aufgabe zu Grunde, eine Anordnung eingangs genannter Art aufzuzeigen, die gegenüber dem Stand der Technik vereinfacht ist, wobei sie gleichwohl die nötige Dichtungsaufgabe erfüllt.

Die erfindungsgemäße Aufgabe wird mit dem Gegenstand des unabhängigen Anspruchs 1 gelöst. Bevorzugte Ausführungsformen finden sich in den Unteransprüchen.

Eine erfindungsgemäße Anordnung zum Abdichten eines Gelenkkopfes weist ein Dichtungselement und ein Halteelement auf. Ein Gelenkkopf, der ein Teil des Gelenkbauteils ist, nimmt zumindest einen Endteil einer Welle auf und erlaubt dieser sich innerhalb des Gelenkkopfes zu bewegen. Der Gelenkkopf stellt damit ein Gehäuse für das Endteil der Welle dar. Die Welle definiert eine axiale Richtung. Die Welle, insbesondere die Drehachse der Welle definiert in Normalposition eine Richtung, die im Folgenden auch als axiale Richtung des Gelenkbauteils bezeichnet wird. Die Normalposition der Welle ist die, in der die Welle keine relative abweichende Axialstellung aufweist. Es kann auch gesagt werden, dass in der Normalposition die Öffnung des Gelenkkopfes, in die die Welle einläuft, eine planare Ebene definiert, die im Wesentlichen mit der Drehachse einen 90° Winkel bildet. Der Gelenkkopf ist zumeist aus Metall hergestellt und beherbergt im Allgemeinen zusätzlich zum Endteil der Welle auch eine Gelenkmechanik des Gelenkbauteils sowie Schmiermittel zum Schmieren der Gelenkmechanik. Um diese Bauteile vor eindringendem Schmutz und/oder Feuchtigkeit zu schützen, wird die erfindungsgemäße Anordnung verwendet. Das Dichtungselement der erfindungsgemäßen Anordnung kann beispielsweise in Form eines Faltbalgs ausgestaltet sein. Dieser kann an seinem einen Ende eine erste Öffnung aufweisen, durch die die Welle geführt wird und kann beispielsweise mit der Welle über eine Schelle oder anderweitig verbunden sein. Das andere Ende des Dichtungselements kann eine zweite Öffnung aufweisen, die von seiner Dimensionierung und Formgebung dem offenen Ende des Gelenkkopfes im Wesentlichen entspricht, also dem Ende des Gelenkkopfes in das die Welle einläuft. Es kann also gesagt werden, dass die Welle in axialer Richtung durch das Dichtungselement verläuft und das Dichtungselement zumindest teilweise die Welle umgibt. Um das Dichtungselement mit dem Gelenkkopf zu verbinden, weist die erfindungsgemäße Anordnung des Weiteren ein Halteelement auf. Dieses Halteelement ist derart ausgestaltet, dass es das Dichtungselement in axialer Richtung pressend am Gelenkkopf hält. Hierzu kann das Haltelement beispielweise derart ausgestaltet sein, dass es den Gelenkkopf in axialer Richtung zumindest teilweise umgibt oder in diesen eingreift. Es kann also gesagt werden, dass das Haltelement das Dichtungselement auf den Gelenkkopf drückt oder presst und hierdurch eine Dichtwirkung zwischen Dichtungselement und Gelenkkopf hergestellt wird. Pressung in diesem Fall bedeutet, dass das flexible und/oder elastische Material des Dichtungselements zwischen dem Haltelement und dem Gelenkkopf gequetscht wird. Das Haltelement presst also eine dem Gelenkkopf zugewandte Fläche des Dichtungselements gegen eine dem Dichtungselement zugewandte Fläche des Gelenkkopfes, also dem Rand des Gelenkkopfes. Diese Flächen können auch als Kontaktflächen des Dichtungselements und des Gelenkkopfes bezeichnet werden. Zwischen diesen Kontaktflächen wird durch die Pressung eine Dichtwirkung erzeugt. Damit die Dichtwirkung noch verstärkt wird, kann der Rand des Gelenkkopfes, also seine Kontaktfläche mit dem Dichtungselement, auch noch zumindest eine umlaufende Nut oder Rille aufweisen, in die das flexible und/oder elastische Material des Dichtungselements bei der Pressung durch das Halteelement hineingequetscht wird, so dass sich die Kontaktfläche zwischen Dichtungselement und Gelenkkopf erhöht. Die dem Rand des Gelenkopfes zugewandte Fläche des Dichtungselements welche in Kontakt mit dem Rand des Gelenkkopfes tritt kann auch als erste oder innere Kontaktfläche bezeichnet werden, wohingegen die Fläche des Dichtungselements welche in Kontakt mit dem Haltelement tritt als zweite Kontaktfläche oder äußere Kontaktfläche des Dichtungselements bezeichnet werden kann.

Dass das Haltelement in axialer Richtung auf den Gelenkkopf aufgesetzt wird bedeutet, dass das Haltelement von oben auf den Gelenkkopf angeordnet wird, um das Dichtungselement auf den Gelenkkopf zu drücken. Die durch das Halteelement aufgebrachte Pressung findet also auch entlang der Erstreckung der Welle statt. Es kann auch gesagt werden, Richtung der Pressung entspricht im Wesentlichen der Erstreckung der Drehachse der Welle. Dies ist anders als bei den bekannten Schellenverbindungen oder Spannbandverbindungen, bei denen die Schelle oder das Spannband den Gelenktopf umfänglich, also in radiale Richtung, umgibt, also eine Quetschwirkung senkrecht zur Erstreckung der Welle erzeugt wird, nicht entlang der Erstreckung der Welle.

Die axiale Befestigung des Dichtungselements am Gelenkkopf erlaubt eine einfache Montage. Hierfür kann das Halteelement derart ausgestaltet sein, dass dieses reversibel, also lösbar, mit dem Gelenkkopf zusammenwirkt, um die Haltekraft aufzubringen. Das Haltelement kann zusätzlich derart ausgestaltet sein, dass dieses ein Auskugeln der Gelenkmechanik verhindert. Dies kann beispielsweise dadurch bewerkstelligt werden, dass das Halteelement den Scherwinkel, also den Axialversatz, der Welle begrenzt, beispielsweise durch Begrenzen der Wege, die die Gelenkmechanik innerhalb des Gelenkkopfes zurücklegen kann. Auch vorteilhaft bei einem axial gehaltenen Dichtungselement ist, dass dieses eine kompakte Bauweise des Gelenkbauteils erlaubt, so dass die Schmiermenge verkleinert werden kann.

Ein Aufbau eines Gelenkbauteils kann also derart beschrieben werden, dass eine Welle an einem Endteil eine Gelenkmechanik aufweist, die von einem Gelenkkopf umgeben ist. Zum Abdichten des Gelenkkopfes befindet sich um die Welle herum eine erfindungsgemäße Anordnung aufweisend ein Dichtungselement, welches mit Hilfe eines Halteelements in axialer Richtung auf den Gelenkkopf gepresst wird. Wie bereits oben dargelegt, erlaubt die erfindungsgemäße axiale Befestigung des Dichtungselements mit Hilfe des Halteelements eine einfache Montage und Demontage. Des Weiteren kann bei der erfindungsgemäßen Anordnung auf die Verwendung von Schellen und O-Ringen am Gelenkkopf vorteilhaft verzichtet werden. Diese Bauteile werden durch das vorgesehene Presshalterung des Dichtungselements ersetzt.

In einer bevorzugten Ausführungsform der erfindungsgemäßen Anordnung ist das Dichtungselement als Dichtbalg oder Faltbalg ausgestaltet. Ein derartiger Balg stellt eine flexible und/oder elastische balgartige Abdeckungen für den Gelenkkopf dar. Der Dichtbalg ist zumeist aus einem Chloropren-Kautschuk, CR, einem Silikon-Kautschuk, VMQ, einem Thermoplastisches Polyurethan, TPE, oder einem Acrylnitril-Butadien-Kautschuk, NBR hergestellt. Dem Fachmann ist aber bewusst, dass auch andere Materialen verwendet werden können. Der Dichtbalg umgibt die Welle und kann an einem Ende eine erste Öffnung aufweisen, deren Dimensionierung und Formgebung der äußeren Dimensionierung und Formgebung der Welle entspricht. An einem gegenüberliegenden Ende kann der Dichtbalg eine zweite Öffnung aufweisen, die der ersten Öffnung gegenüberliegt und die der Dimensionierung und Formgebung des offenen Endes des Gelenkkopfes entspricht.

In einer weiteren bevorzugten Ausführungsform der erfindungsgemäßen Anordnung ist zumindest ein Teil oder ein Bereich der Haltelements ringförmig ausgestaltet. Dabei erstreckt sich vorzugsweise der ringförmige Teil oder Bereich des Halteelements in einer planaren Ebene. Dies kann vorteilhaft sein, wenn das Haltelement mit einem radial symmetrisch ausgebildeten Rand eines Gelenkkopfes zusammenwirken soll. Dabei bildet das ringförmige Halteelement eine zentrale Öffnung aus, durch die sich zumindest ein Teil des Dichtungselements in axialer Richtung erstrecken kann, sowie die in dem Dichtungselement verlaufende Welle. Es kann also gesagt werden, das ringförmige Halteelement umgibt das Dichtungselement und die Welle. In der ringförmigen Ausgestaltung kann das Halteelement einen Außendurchmesser aufweisen, der größer ist als der Außendurchmesser des Gelenkkopfes. Die Formgebung des ringförmigen Haltelements kann dabei der Formgebung des Gelenkkopfes entsprechen. Das ringförmige Haltelement kann zwischen seiner dem Gelenkkopf zugewandten Seite und dem offenen Ende des Gelenkkopfes, also dem Rand des Gelenkkopfes, einen Teil des Dichtungselements gegen das Ende des Gelenkkopfes in axialer Richtung pressen, was zur Abdichtung des Gelenkkopfes führt. In der ringförmigen Ausgestaltung erstreckt sich die planare Ebene des Rings im Wesentlichen senkrecht zur Erstreckung der Welle. Es kann auch gesagt werden, dass die Oberfläche des Rands des Gelenkkopfes und die Oberfläche des ringförmigen Haltelements koplanar sind. Zwischen diesen sich zugewandten Oberflächen wird zumindest ein Teil des Dichtungselements gepresst, wenn das Halteelement an dem Gelenkkopf angeordnet ist.

In einer weiteren bevorzugten Ausführungsform der erfindungsgemäßen Anordnung weist das Haltelement Anschlagmittel auf, um mit dem Gelenkkopf zusammenwirken zu können und zumindest einen Teil des Dichtungselements zwischen dem Gelenkkopf und dem Halteelement zu halten. Das Anschlagmittel ist dabei derart ausgestaltet, dass es eine reversible, also lösbare, Befestigung zwischen dem Haltelement und dem Gelenkkopf erlaubt. Hierzu kann der Gelenkkopf zumindest ein Rückhaltemittel aufweisen, welches mit dem Anschlagmittel zusammenwirken kann, um die Haltewirkung zu erzeugen und das Halteelement am Gelenkkopf zu halten.

Das Anschlagmittel kann beispielsweise in Form von zumindest zwei ersten Vorsprüngen am Halteelement ausgebildet sein. Diese Vorsprünge können den Gelenkkopf zumindest teilweise umgreifen oder in diesen eingreifen, um mit diesem zusammenzuwirken, um eine Haltekraft aufzubringen. Beispielsweise können die Vorsprünge einen Formschluss mit dem Gelenkkopf eingehen. Die Vorsprünge können an ihren freien Enden gewinkelt sein, also beispielsweise hackenartig ausgestaltet sein, um mit entsprechenden Ausnehmungen oder Hinterschneidungen am Gelenkkopf formschlüssig zusammenzuwirken. Es kann auch gesagt werden, dass die Vorsprünge eine Hakenform haben. Die gewinkelten Enden können beispielsweise in Ausnehmungen im oder am Gelenkkopf greifen und so kann die Haltekraft aufgebracht werden. Die Ausnehmungen können einzelne Ausnehmungen sein. Es ist aber auch möglich, dass Hinterschneidungen durch einen umlaufenden Kragen oder eine umlaufende Nut am Gelenkkopf gebildet werden. Die Ausnehmungen oder die umlaufende Nut oder der umlaufende Kragen des Gelenkkopfes können auch als Rückhaltemittel bezeichnet werden, die mit dem Anschlagmittel am Halteelement zusammenwirken, um die Haltewirkung aufzubringen. Die zumindest zwei ersten Vorsprünge können gleich beabstandet am Haltelement ausgebildet werden. Diese können also den Gelenkkopf an zwei gegenüberliegenden Seiten übergreifen oder in diesen eingreifen. Es kann auch gesagt werden, die Vorsprünge wirken um 180° versetzt am Gelenkkopf. Dem Fachmann ist bewusst, dass auch eine größere Anzahl von ersten Vorsprüngen verwendet werden kann und dass diese entsprechend rotationssymmetrisch gleich beabstandet mit dem Gelenkkopf zusammenwirken können. So kann die Beabstandung bei drei ersten Vorsprüngen beispielsweise 120° betragen, bei vier ersten Vorsprüngen 90° usw.

Das Anschlagmittel am Haltelement kann aber beispielsweise auch in Form eines umlaufenden Rings ausgestaltet werden, wobei der Ring an dem freien Ende umlaufend oder zumindest in Teilen gewinkelt ausgestaltet sein kann, um mit einem umlaufenden Kragen oder einer umlaufenden Nut am Gelenkkopf zusammenzuwirken, um so die Haltekraft aufzubringen.

In einer weiteren bevorzugten Ausführungsform der erfindungsgemäßen Anordnung ist das Halteelement einstückig ausgebildet, was seine Stabilität erhöht. Es kann aber auch mehrstückig ausgestaltet sein. Damit das Halteelement in einer Mehrstückigkeit zusammengesetzt werden kann, kann es beispielswiese in zwei oder mehr Segmente aufgeteilt werden, wobei die jeweiligen Segmente Verbindungsmittel aufweisen können, um zusammengesetzt zu werden. So kann beispielsweise das eine Segment Vorsprünge aufweisen, deren freie Enden gewinkelt sind und in komplementäre Ausnehmungen in dem jeweils anderen Segment eingreifen können, um so die Segmente zu verbinden. Dem Fachmann sind aber auch andere Möglichkeiten der Verbindung zweier Segmente bekannt, so dass die Segmente nur bei Überwindung einer gewissen Kraft wieder getrennt werden können. Die Verbindungsmittel können dabei integraler Bestandteil des jeweiligen Segments des Halteelements sein oder können zusätzliche Bauteile sein, die mit den Segmenten zusammenwirken, um die Verbindung herzustellen.

In einer weiteren bevorzugten Ausführungsform der erfindungsgemäßen Anordnung können noch verschiedene Ausbildungen und Herstellungsverfahren für das Halteelement vorgesehen sein. Das Halteelement kann beispielsweise aus Metall gefertigt sein. Es ist aber auch möglich, dass das Halteelement aus Kunststoff gefertigt wird, wobei der Kunststoff die notwendigen mechanischen Eigenschaften für das Halteelement in der erfindungsgemäßen Anordnung aufweisen muss. Hierbei ergibt sich der Vorteil, dass keine Korrosion auftritt.

In einer weiteren bevorzugten Ausführungsform der erfindungsgemäßen Anordnung können das Halteelement und das Dichtungselement auch schon vor der Montage auf den Gelenkkopf miteinander verbunden werden. Diese Verbindung kann reversibel, also lösbar, oder nicht reversibel, also fest sein.

Im Falle der reversiblen Verbindung können das Haltelement und das Dichtungselement formschlüssig ineinandergreifen, um so eine Verbindung herzustellen. Beispielsweise kann das Dichtungselement eine Öse aufweisen, in die zumindest ein zweiter Vorsprung des Halteelements greifen kann. Dies erlaubt nicht nur die axiale Ausrichtung des Halteelements und des Dichtungselements, sondern erlaubt auch eine Verbindung der beiden Elemente bereits vor der Montage auf dem Gelenkkopf. Der zumindest eine zweite Vorsprung kann dabei am freien Ende auch eine oder mehrere Winkelungen aufweisen, beispielsweise Haken, die beim Durchdringen der Öse erst zusammengedrückt werden und nach dem Durchdringen der Öse wieder ausklappen oder aufspringen, um so einen Rückzug des zumindest einen zweiten Vorsprungs entgegenzuwirken. Diese Haken fungieren also als Widerhaken, wenn der zweite Vorsprung durch die Öse gesteckt ist. Erst bei Überwindung der entsprechenden Kraft werden die Elemente wieder voneinander gelöst oder wenn die Haken zusammengedrückt werden. Dem Fachmann sind aber auch noch weitere Möglichkeiten bekannt, wie zwei Bauteile lösbar miteinander verbunden werden können.

Im Falle der festen Verbindung kann das Halteelement an das Dichtungselement angespritzt sein. Es kann also eine feste Verbindung mit dem Halteelement eingehen. Diese feste Verbindung kann durch Adhäsion oder Stoffschluss erreicht werden. Hierzu können beispielsweise Haftvermittler oder selbsthaftende Materialien eingesetzt werden oder die beiden Bauteile können in einem Arbeitsschritt gefertigt werden. In diesem Fall kann auch davon gesprochen werden, dass das Halteelement und das Dichtungselement eine Anordnung oder Bauteilgruppe des Gelenkbauteils bilden. Um die Materialverbindung zwischen dem Halteelement und dem Dichtungselement zu verstärken, gerade wenn starke Belastungen auftreten, kann das Haltelement auch zumindest teilweise mit dem Dichtungselement durchnäht sein. Durchnäht meint, dass das Haltelement eine Mehrzahl von Öffnungen aufweist, die bei der Verbindungsherstellung des Halteelements und des Dichtungselements zumindest teilweise durchsetzt werden mit dem Material des Dichtungselements. Es kann hier auch von einem umspritzten Formschluss gesprochen werden. Dies vergrößert die Kontaktfläche zwischen dem Halteelement und dem Dichtungselement und stärkt somit die Verbindung zwischen den beiden Bauteilen.

Ein Ausführungsbeispiel der erfindungsgemäßen Anordnung ist in der Zeichnung dargestellt. Es zeigen:
- Figur 1:: eine Schnittansicht eines Gelenkbauteils mit einer erfindungsgemäßen Anordnung zum Abdichten eines Gelenkkopfes;
- Figur 2:: eine perspektivische Schnittansicht der Anordnung gemäß der Figur 1;
- Figur 3:: eine perspektivische Ansicht der Anordnung gemäß den Figuren 1 und 2; und
- Figur 4:: eine perspektivische Unteransicht der Anordnung gemäß Figur 3.
Die hierin verwendete Terminologie dient nur dem Zwecke des Ausführungsbeispiel und soll nicht beschränkend sein. Wie hierin verwendet können die Singularformen von "einer/eine/eines" und "der/die/das" ebenso die Pluralformen beinhalten, es sei denn, dass der Kontext eindeutig etwas gegenteiliges anzeigt.

Räumlich relative Begriffe wie "innen", "außen", "unterhalb", "darunter", "niedriger", "oberhalb", "über" und ähnliches können hierin verwendet werden zum Zwecke der Beschreibung, um die Beziehung eines Elements oder Merkmals zu einem anderen Element oder Merkmal wie in den Figuren gezeigt zu beschreiben. Räumlich relative Begriffe können verschiedene Orientierungen der erfindungsgemäßen Anordnung umfassen, zusätzlich zu der Orientierung, die in den Figuren dargestellt ist.

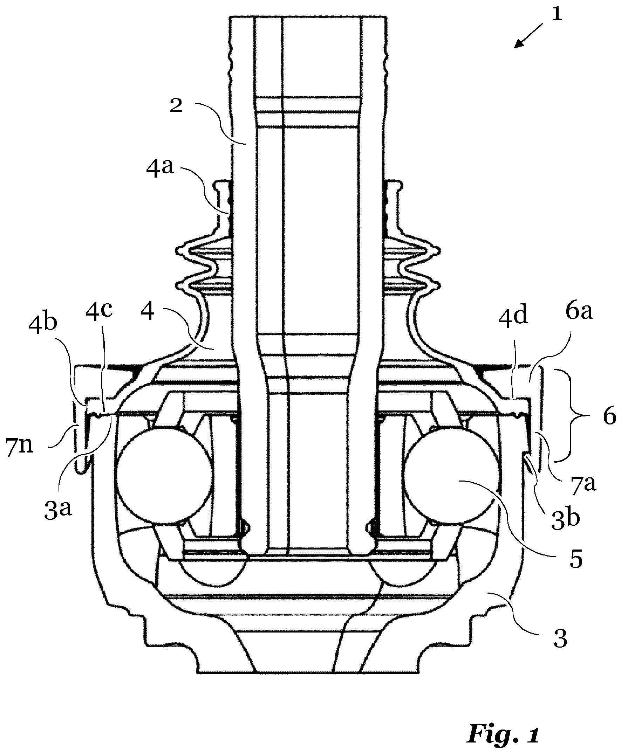

Figur 1 zeigt eine Schnittansicht eines Gelenkbauteils 1 mit einer erfindungsgemäßen Anordnung zum Abdichten. Das Gelenkbauteil 1 umfasst in dem hier gezeigten Ausführungsbeispiel eine Welle 2, deren eines Ende in einem Gelenkkopf 3 angeordnet ist. In dem Gelenkkopf 3 ist die Welle 2 drehbar und schwenkbar gelagert. Dies wird bewerkstelligt durch eine bekannte Gelenkmechanik 5. Die Gelenkmechanik 5 kann aus Kugeln und Kugellaufflächen bestehen, um die entsprechende Bewegung der Welle 2 zu ermöglichen. Der Gelenkkopf 3 bildet ein Gehäuse für die Gelenkmechanik 5 und für das eine Ende der Welle 2 aus. Dieses Gehäuse ist zumindest in Richtung der Welle 2 offen und weist in Richtung der Längserstreckung der Welle 2 einen die Welle 2, in einem gewissen Abstand, umgebenden Rand 3a auf. Dieser Rand 3a kann auch als Rand des Gelenkkopfes 3 bezeichnet werden.

Die Welle 2 definiert eine Drehachse und die weiteren beschriebenen Bestandteile des Gelenkbauteils 1 umgeben in dem hier gezeigten Ausführungsbeispiel diese Drehachse rotationssymmetrisch in axialer Richtung.

Um die Welle 2 herum ist in dem hier gezeigten Ausführungsbeispiel ein Faltbalg 4 angeordnet, dieser kann auch als Falten- oder Rollbalg bezeichnet werden, der im Sinne dieser Offenbarung auch als Dichtungselement bezeichnet werden kann. Ganz allgemein kann auch von einer flexiblen Membran gesprochen werden. Der Faltbalg 4 hat eine im Wesentlichen konische Ausgestaltung wobei das eine Ende 4a des Faltbalgs 4 eine erste Öffnung aufweist, deren Innendurchmesser im Wesentlichen dem Außendurchmesser der Welle 2 entspricht, so dass dieses Ende 4a des Faltbalgs 4 eng an der Welle 2 anliegt. Am anderen Ende 4b weist der Faltbalg 4 eine zweite Öffnung auf deren Innendurchmesser im Wesentlichen dem Innendurchmesser des Gelenkkopfes 3 entspricht. Dabei liegt dieses Ende 4b des Faltbalgs 4 auf dem Rand 3a des Gelenkkopfes 3 auf. Der Faltbalg 4 hat an dem Ende 4b einen Außendurchmesser, der im Wesentlichen dem Außendurchmesser des Gelenkkopfes 3 entspricht. Es kann auch gesagt werden, dass das Ende 4b des Faltbalgs 4 den Rand 3a des Gelenkkopfes 3 vollständig kontaktiert. Die den Rand 3a des Gelenkkopfes kontaktieren Fläche des Faltbalgs 4 kann auch als Kontaktfläche 4c bezeichnet werden. Diese Kontaktfläche 4c kann auch als innere Kontaktfläche bezeichnet werden.

In dem hier gezeigten Ausführungsbeispiel ist am Ende 4b des Faltbalgs 4, also dort wo dieser den Gelenkkopf 3 berührt ein Haltelement 6 angeordnet. Dieses Halteelement 6 hält und presst das eine Ende 4b des Faltbalges 4 auf den Rand 3a des Gelenkkopfes 3. Hierzu kontaktiert das Haltelement 6 einerseits das Ende 4b des Faltbalgs 4 und andererseits den Gelenkkopf 3. Es kann also auch gesagt werden, das Halteelement 6 stellt eine Verbindung zwischen dem Faltbalg 4 und dem Gelenkkopf 3 her. Dabei wird das Ende 4b des Faltbalgs 4 zwischen dem Haltelement 6 und dem Rand 3a des Gelenkkopfes 3 verpresst und zwar durch die Haltewirkung des Haltelements 6 am Gelenkkopf 3. Die das Haltelement 6 kontaktierende Fläche des Faltbalgs 4 kann auch als Kontaktfläche 4d bezeichnet werden. Diese Kontaktfläche 4d kann auch als äußere Kontaktfläche bezeichnet werden und liegt der inneren Kontaktflache 4c gegenüber.

Das Halteelement 6 ist in dem hier gezeigten Ausführungsbeispiel ringförmig ausgestaltet und umgibt die Welle 2 und den Faltbalg 4. Es kann auch gesagt werden, die Welle 2 und der Faltbalg 4 sind in einer durch die Ringform definierten zentralen Öffnung des ringförmigen Halteelements 6 angeordnet. In dem hier gezeigten Ausführungsbeispiel weist das ringförmige Halteelement 6 eine ringförmige Grundplatte 6a auf, dessen eine Seite dem Faltbalg 4 zugewandt ist und zumindest das eine Ende 4b des Faltbalgs 4 auf den Rand 3a des Gelenkkopfes 3 drückt. Es kann auch gesagt werden, dass dieses Ende 4b des Faltbalgs 4 zwischen dem Rand 3a des Gelenkkopfes 3 und der einen Seite des ringförmigen Haltelements 6 gepresst wird. Hierdurch wird eine Dichtwirkung zwischen dem Gelenkkopf 3 und dem Faltbalg 4 erzeugt, so dass kein Schmutz und/oder Feuchtigkeit in den Gelenkkopf 3 gelangen kann und kein Schmiermittel aus der Gelenkmechanik 5 austreten kann. Das ringförmige Haltelement 6 kann also zwischen seiner dem Gelenkkopf 3 zugewandten Seite und dem offenen Ende des Gelenkkopfes 3, also dem Rand 3a des Gelenkkopfes 3, einen Teil des Faltbalgs 4 gegen das Ende des Gelenkkopfes 3 in axialer Richtung pressen. Von der Grundplatte 6a des ringförmigen Haltelements 6 erstrecken sich in dem hier gezeigten Ausführungsbeispiel mehrere erste Vorsprünge 7a bis 7n. Diese mehreren ersten Vorsprünge 7a bis 7n weisen an ihren freien Enden, also den Enden, die der Grundplatte 6a gegenüberliegen, Abwinkelungen auf. Es kann auch gesagt werden, die Vorsprünge 7a bis 7b sind hakenförmig. Diese Haken 7a bis 7n können in dem hier gezeigten Ausführungsbeispiel einen außen am Gelenkkopf 3 umlaufenden Kragen 3b umgreifen, so dass ein Formschluss hergestellt werden kann. Mittels der Haken 7a bis 7n und dem umlaufenden Kragen 3b wird das Halteelement 6 am Gelenkkopf 3 gehalten und kann so den Faltbalg 4 auf den Rand 3a des Gelenkkopfes 3 drücken. Es kann auch gesagt werden, das Halteelement 6 wird auf den Gelenkkopf 3 geklickt. Dem Fachmann sind auch noch weitere Möglichkeiten bekannt, wie zwei Bauteile, hier der Gelenkkopf 3 und das Halteelement 6 reversibel miteinander verbunden werden können. Anstelle des umlaufenden Kragens 3b kann der Gelenkkopf 3 auch beispielsweise einzelne Aufnahmen oder Ösen für die mehreren ersten Vorsprünge 7a bis 7n aufweisen oder eine umlaufende Nut.

In dem hier gezeigten Ausführungsbeispiel kann auch davon gesprochen werden, dass der Faltbalg 4, also das Dichtungselement, auf den Gelenkkopf 3 von oben aufgesetzt wird und das Haltelement 6 von oben auf den Faltbalg 4 aufgesetzt wird. Somit sind beide Bauteile über die Welle 2 geschoben und bilden zusammen die obere Abdichtung des Gelenkkopfes 3.

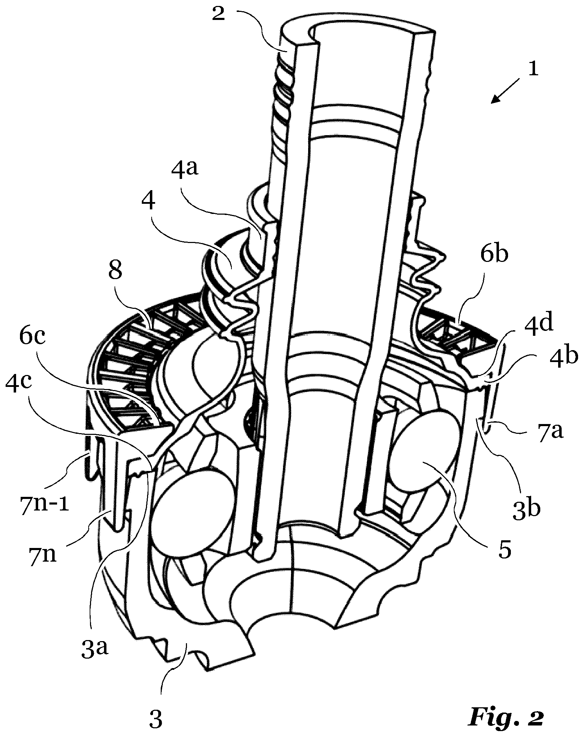

Figur 2 zeigt eine perspektivische Schnittansicht des Gelenkbauteils 1 mit der erfindungsgemäßen Anordnung gemäß Figur 1. Gleiche Bezugszeichen referenzieren gleiche Bauteile. In dem hier gezeigten Ausführungsbeispiel ist zu erkennen, dass die Grundplatte 6a des ringförmigen Halteelements 6 nicht durchgängig ausgestaltet ist, sondern mit Stegen 8 versehen ist. Diese Stege 8 erstrecken sich von einem äußeren Rand 6b zu einem inneren Rand 6c der Grundplatte 6a des ringförmigen Halteelements 6. Der äußere Rand 6b hat dabei einen größeren Durchmesser als der innere Rand 6c und umgibt den inneren Rand 6c. Es kann auch gesagt werden, der innere Rand 6c liegt näher an der Welle 2 als der äußere Rand 6b. Zwischen den Stegen 8 befinden sich jeweils Öffnungen. Der äußere Rand 6c und der innere Rand 6b sind also voneinander beabstandet und nur durch die Stege 8 verbunden. Dies hat nicht nur den Vorteil, dass Gewicht reduziert wird, im Vergleich zu einer Vollmaterialgrundplatte 6a, sondern auch, dass die Stabilität erhöht wird. Auch können diese Öffnungen zwischen den Stegen 8 dazu verwendet werden, den Faltbalg 4 an das Haltelement 6 zu nähen - hier nicht gezeigt. D.h. wenn der Faltbalg 4 mit dem Haltelement 6 bereits vor der Montage auf dem Gelenkkopf 3 fest verbunden werden soll, so kann das Material des Faltbalgs 4 bereits bei Herstellung der erfindungsgemäßen Anordnung zumindest teilweise in die Öffnungen zwischen den Stegen 8 eindringen, um so die Kontaktfläche zwischen den Faltbalg 4 und dem Halteelement 6 zu vergrößern.

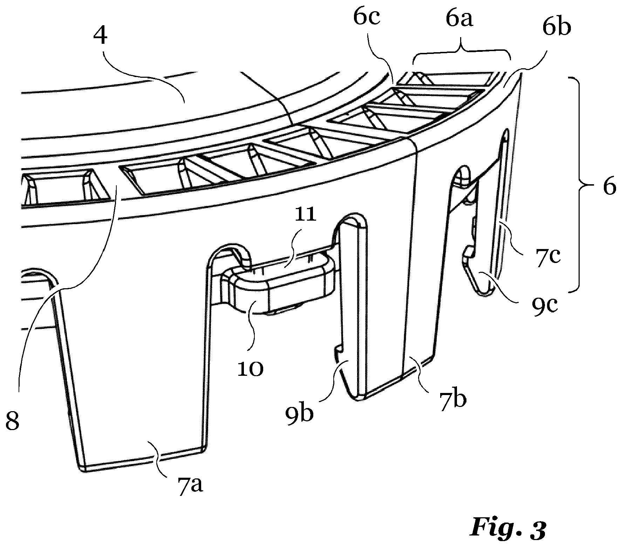

Figur 3 zeigt eine perspektivische Ansicht einer erfindungsgemäßen Anordnung gemäß der Figuren 1 und 2. Bei dem hier gezeigtem Ausführungsbeispiel sind der Faltbalg 4 und das Haltelement 6 bereits verbunden. Das Ausführungsbeispiel zeigt also die erfindungsgemäße Anordnung vor der Montage auf dem Gelenkkopf 3. Gleiche Bezugszeichen referenzieren gleiche Bauteile. In dem hier gezeigten

Ausführungsbeispiel weisen die freien Enden der ersten Vorsprünge 7a bis 7n Abwinkelungen 9a bis 9n auf. Diese Abwinkelungen 9a bis 9n sind als schiefe Ebenen mit Versatz an den freien Enden der ersten Vorsprünge 7a bis 7n ausgestaltet. Bei der Montage kann der Gelenkkopf 3 - hier nicht gezeigt - zunächst entlang der schiefen Ebene geführt werden, dabei werden die ersten Vorsprünge 7a bis 7n zunächst nach Außen gedrückt und wenn die Vorsprünge 7a bis 7n den Gelenkkopf 3 umgreifen, verrasten die Abwinkelungen mit dem umlaufenden Kragen 3b am Gelenkkopf 3, so dass das Halteelement 6 am Gelenkkopf 3 gehalten wird. Beim Verrasten drängen die Vorsprünge 7a bis 7n wieder in ihre Ausgangsposition zurück. Es kann auch gesagt werden, dass das Halteelement 6 auf den Gelenkkopf 3 geklickt oder auf diesem verrastet wird.

In dem hier gezeigten Ausführungsbeispiel sind die Vorsprünge 7a bis 7n gleichmäßig am äußeren Rand 6b der Grundplatte 6a des Haltelements 6 angeordnet. Je nach Anzahl n der ersten Vorsprünge 7a bis 7n ist deren Abstand als 360°/*n* gewählt.

In dem hier gezeigten Ausführungsbeispiel befindet sich zwischen zumindest zwei der ersten Vorsprünge 7a und 7b ein weiterer Vorsprung 11. Dieser zweite Vorsprung 11 hat eine geringere Erstreckung von der Grundplatte 6a des ringförmigen Halteelements 6 als die ersten Vorsprünge 7a bis 7n. Dieser zumindest eine zweite Vorsprung 11 ist dazu ausgelegt in eine Öse 10 an dem Ende 4b des Faltbalgs 4 zu greifen. Hierdurch wird nicht nur eine Verdrehung des Faltbalgs 4 verhindert, sondern das Ende 4b des Faltbalgs 4 und das Haltelement 6 behalten ihre Ausrichtung zueinander bei der Montage auf dem Gelenkkopf 3.

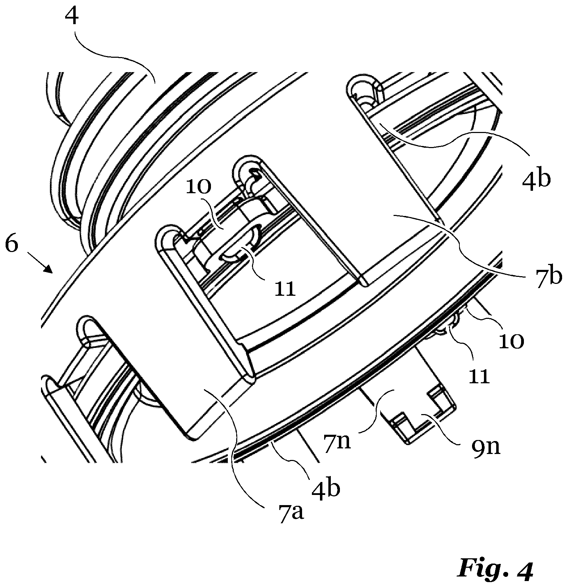

Figur 4 zeigt eine perspektivische Unteransicht der erfindungsgemäßen Anordnung gemäß Figur 3. Gleiche Bezugszeichen referenzieren gleiche Bauteile. In dem hier gezeigten Ausführungsbeispiel sind an gegenüberliegenden Seiten des Halteelements 6, also um 180°versetzt, zwei zweite Vorsprünge 11 gezeigt, die in jeweils zwei Ösen 10 des Faltbalgs 4 greifen. Da das Material des Faltbalgs 4 flexibel und/oder elastisch ist, sorgt diese Befestigung des einen Endes 4b des Faltbalgs 4 dafür, dass die Öffnung des Faltbalgs 4 sich nicht verkleinert, insbesondere bei der Montage auf dem Gelenkkopf 3. Diese zweiten Vorsprünge 11 und Ösen 10 spannen also das Ende 4b des Faltbalgs 4 auf, so dass dieses eine optimale Ausrichtung mit dem Rand 3a des Gelenkkopfes 3 bei der Montage auf dem Gelenkkopf 3 hat.

## Patentansprüche

1. Eine Anordnung zum Abdichten eines Gelenkkopfes (3) eines Gelenkbauteils (1), aufweisend:
ein Dichtungselement (4); und
ein Halteelement (6), wobei das Halteelement (6) zumindest teilweise den Gelenkkopf (3) in axialer Richtung umgibt und ausgestaltet ist, um das Dichtungselement (4) in axialer Richtung pressend am Gelenkkopf (3) zu halten.

2. Die Anordnung nach Anspruch 1, wobei das Dichtungselement (4) ein Dichtbalg zum Abdichten einer Welle (2) ist, wobei die Welle (2) zumindest teilweise in dem Gelenkkopf (3) angeordnet ist.

3. Die Anordnung nach einem der vorhergehenden Ansprüche, wobei das Halteelement (6) ringförmig ausgebildet ist.

4. Die Anordnung nach einem der vorhergehenden Ansprüche, wobei das Halteelement (6) zumindest zwei erste Vorsprünge (7a-7n) aufweist, wobei die zumindest zwei ersten Vorsprünge (7a-7n) mit dem Gelenkkopf (3) zusammenwirken, um das Dichtungselement (4) in axialer Richtung gegen den Gelenkkopf (3) zu pressen.

5. Die Anordnung nach Anspruch 4, wobei die zumindest zwei ersten Vorsprünge (7a-7n) gleich beabstandet sind.

6. Die Anordnung nach den Ansprüchen 4 oder 5, wobei an freien Enden der zwei ersten Vorsprünge (7a-7n) Anschlagmittel (9a-9n) angeordnet sind, die mit dem Gelenkkopf (3) in Eingriff gebracht werden können.

7. Die Anordnung nach einem der vorhergehenden Ansprüche, wobei das Halteelement (6) aus Metall oder aus Kunststoff gefertigt ist.

8. Die Anordnung nach einem Ansprüche 1 bis 7, wobei das Halteelement (6) an das Dichtungselement (4) angespritzt ist.

9. Die Anordnung nach einem der Ansprüche 1 bis 7, wobei das Halteelement (6) mit Teilen des Dichtungselements (4) durchnäht ist oder Teile des Halteelements (6) and das Dichtungselement (4) gehaftet sind.

10. Die Anordnung nach einem der vorhergehenden Ansprüche, wobei das Haltelement (6) zumindest einen zweiten Vorsprung (11) aufweist; und das Dichtungselement (4) eine Öse (10) aufweist in die der zumindest eine zweite Vorsprung (11) greifen kann.
